# EUROPÄISCHE PATENTSCHRIFT

(11) **EP 2 052 833 B1**
(45) Veröffentlichungstag und Bekanntmachung des Hinweises auf die Patenterteilung: **11.01.2012**
(21) Anmeldenummer: 07020696.6
(22) Anmeldetag: 23.10.2007
(51) Int. Cl.: B29C 45/00, B29C 37/00, B60R 21/215

(54) **Verfahren und Vorrichtung zur Herstellung eines Formteils mit einer Sollbruchlinie für eine Airbagöffnung**
Method and device for manufacturing a moulded part with a tear line for an airbag aperture
Procédé et dispositif destinés à la fabrication d'une pièce de formage dotée d'une ligne de rupture cible en vue d'une ouverture d'airbag

(43) Veröffentlichungstag der Anmeldung: 29.04.2009
(73) Patentinhaber: PEGUFORM GMBH, 79268 Bötzingen (DE)
(72) Erfinder: Schirmer, Hans, 68600 Heiteren (FR)
(74) Vertreter: Patentanwälte Westphal, Mussgnug & Partner

(56) Entgegenhaltungen:
- EP-A- 1 493 545
- DE-A1- 19 958 865
- DE-A1-102005 050 368
- DE-A1-102005 050 370
- US-A1- 2003 209 890

## Beschreibung

Die vorliegende Erfindung betrifft ein Verfahren zur Herstellung eines eine Sollbruchlinie für eine Airbagöffnung aufweisenden Formteils mit den Merkmalen des Oberbegriffs des Anspruchs 1.

Die Erfindung betrifft weiterhin eine Vorrichtung zur Herstellung eines Formteils mit einer Sollbruchlinie für eine Airbagöffnung mit den Merkmalen des Oberbegriffs des Anspruchs 12.

Formteile aus Kunststoff werden in der Fahrzeugindustrie in vielen Bereichen eingesetzt, insbesondere als Teile für die Innenverkleidung, wie z.B. Instrumententafeln, Säulenverkleidungen, Türverkleidungen, Seitenverkleidungen etc. Üblicherweise bestehen solche als Innenverkleidung eingesetzte Kunststoffformteile aus mehreren Schichten von Kunststoffen, wobei jede Schicht spezifische Eigenschaften besitzt. So bestehen beispielsweise Instrumententafeln aus einer harten Trägerschicht, die aus einem glasfaserverstärkten thermoplastischen Kunststoff aufgebaut sein kann, auf der eine Schaumschicht beispielsweise aus Polyurethan aufgebracht ist. Die Schaumschicht ist häufig mit einer Dekorschicht versehen, die die Sichtseite des Formteils bildet. Dazu wird beispielsweise der Träger mit einer hinterschäumten Folie, die eine Dekorstruktur aufweist und optisch ansprechend ist, in einem Kaschierwerkzeug verbunden.

Es ist jedoch auch möglich, bei geeigneter Wahl des Kunststoffes und einer entsprechend vorgegebenen Oberfläche im Formwerkzeug die dekorative Oberfläche direkt beim Überspritzen des Trägers mit einem thermoplastischen Kunststoff auszubilden.

So wird in der DE 10 2005 039 124 A1 ein Verfahren zur Herstellung eines zweischichtigen Verbundteils beschrieben, bei dem der Träger aus einem faserverstärkten thermoplastischen Kunststoff mittels eines Spritzgießverfahrens in einer ersten Kavität ausgebildet wird und anschließend mit einem thermoplastischen Kunststoff ohne Faseranteil mittels eines Spritzgießverfahrens in einer zweiten Kavität überspritzt wird. Dabei weist die zweite Kavität an ihrer Oberfläche eine Narbung auf, durch die eine Narbung in der Oberfläche der Deckschicht erzeugt wird.

Wie bereits eingangs erwähnt, werden derartige Verbundteile als Innenverkleidung für Kraftfahrzeuge eingesetzt, wie zum Beispiel Instrumententafeln, Säulenverkleidungen, Türverkleidungen und Seitenverkleidungen. Die Innenverkleidungen dienen heute in der Regel gleichzeitig als Abdeckungen für Airbagmodule. Um das Öffnen eines Airbags und sein Eindringen in das Fahrzeuginnere zu erleichtern, sind die Trägerschichten des entsprechenden Formteils für die Innenverkleidung im Abdeckbereich des Airbags häufig mit Sollbruchlinien versehen. Bei der Aktivierung eines Airbags trifft nun der expandierende Airbag auf die Trägerschicht, welche dann entlang der Sollbruchlinien bricht.

Sollbruchlinien für Airbagabdeckungen werden in der Regel nach der Fertigstellung des Formteils mittels eines Lasers oder einer Fräse von der Rückseite her in den Träger des Formteils eingebracht. Der Nachteil dieser Verfahrensweise besteht darin, dass ein zusätzlicher Fertigungsschritt erforderlich ist, der zudem noch einer präzisen Fertigungskontrolle unterliegen muss, damit es zu keiner Beschädigung des Formteils kommt.

In der DE 199 58 865 A1 wird eine im Spritzgießverfahren herstellbare Airbagabdeckvorrichtung für Kraftfahrzeuge beschrieben mit einer Trägerschicht, die im Abdeckbereich des Airbags Sollbruchlinien aufweist. Zur Ausbildung der Sollbruchlinien wird vorgeschlagen, eine Werkzeugteilform mit wenigstens einem in den Formteilhohlraum versetzbaren Klingenwerkzeug auszubilden. Dabei verfügt die Spritzgussform über ein Formgrundteil, in dem als Klingenwerkzeug eine längliche Klinge verschiebbar angeordnet ist. Das Spritzgießwerkzeug weist darüber hinaus ein erstes und ein zweites Formgegenteil auf, die dem Formgrundteil gegenüberliegen, wobei mit dem ersten Formgegenteil eine Kavität ausgebildet wird, die zur Aufnahme des Polymermaterials für einen Splitterschutz vorgesehen ist, während das zweite Formgegenteil die Kavität für den Träger beinhaltet.

Beim Einspritzen des den Splitterschutzteil bildenden Elastomers reicht die Klingenschneide des Klingenwerkzeugs bis nahe an das erste Formgegenteil heran und bleibt in dieser Position bis das Einspritzen des Elastomers beendet und das Splitterschutzteil teilweise abgekühlt ist.

Anschließend wird durch den Austausch des ersten Formgegenteils durch das zweite Formgegenteil eine zweite Kavität ausgebildet, in die das zur Herstellung der Trägerschicht vorgesehene Polymermaterial eingespritzt wird. Das Einspritzen des Polymermaterials für die Trägerschicht erfolgt bei noch heißem Elastomer für das Splitterschutzteil, das dabei typischerweise noch eine Temperatur zwischen 80° und 200°C aufweist. Gleichzeitig wird durch Vorschieben der Klinge bis nahe an die Oberfläche des zweiten Formgegenteils die Trägerschicht bis auf eine geringe Restmaterialstärke geschwächt. Dieses Vorschieben der Klinge erfolgt typischerweise bei einer Temperatur der Trägerschicht von ca. 100° bis 240°C und die Klinge bleibt in dieser Position stehen bis das Trägermaterial auf etwa 80°C abgekühlt ist.

Voraussetzung für die Durchführbarkeit des oben beschriebenen Verfahrens ist, dass es sich bei der ersten Schicht für den Splitterschutzteil um eine Elastomerschicht handelt, die Materialbelastungen während des Einbringens der Sollbruchlinie in die Trägerschicht aufnehmen kann und einem Druck durch das Schneidwerkzeug elastisch ausweicht. Um Sollbruchlinien in ein Formteil einzubringen, das aus einer starren Trägerschicht und einer aufgespritzten Dekor- oder Schaumschicht besteht, ist das oben beschriebene Verfahren nicht geeignet, da das Durchschieben der Klinge aus der erstarrten Trägerschicht in die Dekor- oder Schaumschicht zu einer Zerstörung des Formteils führen würde.

In der DE 10 2005 050 370 A1 wird ein Verfahren zur Herstellung einer Kraftfahnzeuginnenausstattungs-Baugnuppe beschrieben,_ bei dem schon während des Spritzgießverfahrens mit Hilfe eines gleitbeweglichen Schiebers eine Sollbruchlinie vorgefertigt wird.

Es besteht somit weiterhin das Problem, ein Verfahren zu finden, das die Nachteile des oben beschriebenen Standes der Technik nicht aufweist.

Gelöst wird diese Aufgabe durch ein Verfahren mit den Merkmalen des Anspruchs 1.

Aufgabe der vorliegenden Erfindung ist es auch, eine Vorrichtung zur Herstellung eines eine Sollbruchlinie für eine Airbagöffnung aufweisenden Formteils anzubieten, mit der unter meidung der Nachteile des Standes der Technik derartige Formteile gefertigt werden können.

Gelöst wird diese Aufgabe durch eine Vorrichtung mit den Merkmalen des Anspruchs 12.

Vorteilhafte Ausführungsformen sowohl des Verfahrens als auch der Vorrichtung sind Gegenstand der entsprechenden Unteransprüche.

Während die Herstellung von Formteilen für Innenverkleidungen von Kraftfahrzeugen auf konventionelle Weise in der Regel über drei Stufen verläuft, die auch in drei unterschiedlichen Formwerkzeugen gefertigt werden, kann nach dem vorliegenden Verfahren ein Formteil in einem zweistufigen Prozess in einem einzigen Formwerkzeug hergestellt werden, wobei während des Verfahrens auch eine für eine Airbagabdeckung erforderliche Sollbruchlinie in das Formteil eingebracht wird.

Bei einem konventionellen Verfahren zur Herstellung einer Instrumententafel wird zunächst beispielsweise eine elastische Dekorfolie als Slushhaut im Slush-Verfahren hergestellt. Diese Folie wird in einem zweiten Schritt hinterschäumt und das dabei gewonnene Formteil wird dann in einem dritten Schritt mit einem Träger zusammengebracht.

Beim vorliegenden Verfahren wird dagegen zunächst in einem zweistufigen Formwerkzeug in einer ersten Stufe mit einem ersten Formgegenstück mit einer ersten Kavität über einen ersten Spritzgießzyklus eine Trägerschicht ausgebildet. Anschließend wird das Formwerkzeug geöffnet und die Basisform mitsamt Träger wird mit dem zweiten Formgegenstück kombiniert, wobei eine zweite Kavität ausgebildet wird, in die in einem zweiten Spritzgießzyklus das Polymermaterial für die Dekorschicht eingespritzt wird. Bei einer bevorzugten Ausgestaltung der vorliegenden Erfindung handelt es sich bei dem Polymermaterial um ein mit Treibmittel versetzte thermoplastisches Elastomer, das zum Aufbringen einer geschäumten Schicht eingespritzt wird, wobei durch einen gesteuerten Expansionshub des Spritzgießwerkzeuges während des zweiten Spritzgießzyklus eine Schaumschicht mit Dekoroberfläche ausgebildet wird.

Während des ersten Spritzgießzyklus werden in der Trägerschicht Durchbrüche ausgebildet, durch die beim zweiten Spritzgießzyklus ein in die Basisform des Formwerkzeugs integriertes Perforationswerkzeug in die Dekor- oder Schaumschicht eingeführt wird.

Als thermoplastischer Kunststoff für den Träger kann Polypropylen (PP), Polyethylen (PE), Polybutylenterephthalat (PBT), Polyamid (PA), Polystyrol (PS), Polycarbonat (PC), Polymethylmethacrylat (PMMA), Acrylnitril-Butadien-Styrol (ABS), Acrylnitril-Butadien-Styrol / Polycarbonat Copolymerisat (ABS-PC) oder Polyoxymethylen (POM) eingesetzt werden, wobei in einer bevorzugten Ausführungsform das Polymermaterial mit Fasern verstärkt ist. Als Fasern kommen dafür Glasfasern, Karbonfasern oder auch textile Naturfasern, wie z.B. Hanf und Sisal, in Frage.

Die Dekorschicht wird aus einem thermoplastischen Elastomer (TPE) auf Basis von Polyurethan (PU), Polypropylen (PP), Polyethylen (PE) oder Polyamid (PA) gebildet. Bei einer bevorzugten Ausgestaltung der vorliegenden Erfindung werden mit Treibmittel beladene thermoplastischen Elastomere (TPE) eingesetzt.

Bei dem Formwerkzeug handelt es sich um ein einzelnes, mindestens zweistufiges Formwerkzeug, das eine Basisform und mindestens zwei Formgegenstücke umfasst, wobei in die Basisform ein Perforationswerkzeug integriert ist, das mit einem Schneidmesser oder Perforationsnadeln bestückt ist.

Das Formwerkzeug ist so konzipiert, dass in einer ersten Stufe mit der Basisform und einem ersten Formgegenstück in einer ersten Kavität eine Trägerschicht hergestellt wird, in der Durchbrüche ausgebildet sind, durch die beim zweiten Spritzgießzyklus mit einem zweiten Formgegenstück das Perforationswerkzeug bzw. das Perforationselement, wie z.B. ein Schneidmesser oder einer Nadel, in die Dekorschicht oder geschäumte Schicht eingeführt wird.

Soll eine geschäumte Dekorschicht hergestellt werden, wird für diesen zweiten Schritt ein mit Treibmitteln beladenes thermoplastisches Elastomer eingesetzt und das Formwerkzeug durchläuft beim zweiten Spritzgießzyklus gleichzeitig einen Expansionshub, wobei das in dem Polymermaterial gelöste Treibmittel expandiert und eine Schaumschicht ausgebildet wird, deren Kern eine geringe Dichte aufweist, während die Außenhaut und die dem Träger benachbarte Schicht kompakt und gleichmäßig ausgebildet ist. Die Qualität der Außenhaut ist dabei so hochwertig, dass die Außenhaut problemlos als Sichtseite und Dekoroberfläche eingesetzt werden kann.

Ein erfindungswesentlicher Schritt beim oben beschriebenen Verfahren ist die Ausbildung von Durchbrüchen in der Trägerschicht im ersten Spritzgießzyklus mit Hilfe des in die Basisform des Formwerkzeuges integrierten Perforationswerkzeugs. Diese Durchbrüche werden erfindungsgemäß mit Hilfe von in das Formwerkzeug integrierte Noppen, die jeweils mit Perforationswerkzeugen bestückt sind, ausgebildet.

Es ist nun vorgesehen, dass das in das Formwerkzeug integrierte Perforationswerkzeug während oder nach dem Expansionshub beim zweiten Spritzgießzyklus in das noch nicht erstarrte thermoplastische Polymermaterial der Dekor- oder Schaumschicht eingeführt wird, sodass im ausgefahrenen Zustand des Perforationswerkzeuges am Ende des zweiten Spritzzyklus eine dünne ungeschwächte Restwand in der Dekor- oder Schaumschicht verbleibt.

Bei einer vorteilhaften Ausgestaltung der Erfindung, bei der eine geschäumten Dekorschicht auf den Träger aufgebracht werden soll, ist die Formkavität des Formwerkzeugs für den zweiten Spritzgießzyklus zunächst auf eine minimale Volumengröße zusammengefahren und wird zuerst vollständig mit der mit Treibmittel beladenen Spritzgussmasse befüllt. Dabei wird der Spritzdruck so hoch gehalten, dass die Spritzgussmasse noch nicht aufschäumt. Ausgehend von den Begrenzungswänden der Formkavität wird auf diese Weise zunächst eine im Wesentlichen schaumfreie Deckschicht ausgebildet und der Expansionshub wird dann in dem Augenblick initiiert, in dem die gewünschte Deckschichtdicke erreicht ist. Durch zeitliche und größenmäßige Steuerung des Werkzeughubs lassen sich die Wandstärke der Deckschicht sowie die Dicke des Schaumstrukturkerns unabhängig voneinander variabel gestalten. Nach der Verfestigung der Schaumstruktur wird das Werkzeug vollständig geöffnet und das fertiggestellte Formteil kann entnommen werden. Die schaumfreie Deckschicht ist als Dekorschicht geeignet und kann dabei durch entsprechende Strukturierungen auf der Werkzeugoberfläche mit einer Narbung oder sonstigen dekorativen Strukturen versehen werden.

Das Perforationswerkzeug selber verbleibt im erstarrenden Schaum bzw. im erstarrenden Elastomer, bis die Schicht auf etwa 80°C abgekühlt ist, und kann dann wieder eingefahren werden, wobei die fertige Sollbruchlinie bzw. Perforation in der Dekor- bzw. Schaumschicht zurückbleibt.

Mit dem vorliegenden Verfahren gelingt es erstmals, in einem einzigen Formwerkzeug ein komplettes Formteil für eine Innenverkleidung eines Kraftfahrzeugs im Spritzgießverfahren herzustellen und dabei im Formteil im gleichen Arbeitsgang eine Sollbruchlinie für eine Airbagabdeckung auszubilden.

Das oben beschriebene zweistufige Verfahren, bei dem in der ersten Stufe die kompakte Trägerschicht ausgebildet wird, während sich in der zweiten Stufe eine Dekorschicht bzw. eine dekorative Schaumschicht bildet, ist hervorragend geeignet für die Herstellung von Formteilen für Innenverkleidungen von Fahrzeugen. Das Verfahren lässt sich für den Fall, dass weitere Schichten aufgetragen werden sollen und vielschichtige Formteile angestrebt werden, problemlos auch auf drei oder mehr Stufen erweitern, wozu dann eine entsprechende Anzahl von Formgegenstücken erforderlich ist, die nacheinander eingesetzt werden. Auch in diesem Falle können Sollbruchlinien durch in die Basisform des Formwerkzeugs integrierte Perforationswerkzeuge während des Formgebungsprozesses im Formteil ausgebildet werden.

Im Folgenden wird eine bevorzugte Ausführungsform der vorliegenden Erfindung, bei der eine dekorative Schaumschicht auf einen Träger aufgetragen wird, anhand von Abbildungen ausführlich erläutert. Dabei zeigt:
- Fig. 1: einen Schnitt durch einen Teilbereich eines Formwerk- zeugs mit einem in die Basisform integrierten Perfo- rationswerkzeug, kombiniert mit einem ersten Formge- genstück,
- Fig. 2: einen Schnitt durch einen Teilbereich eines Formwerk- zeugs mit einem in die Basisform integrierten Perfo- rationswerkzeug, kombiniert mit einem zweiten Formge- genstück, vor dem Expansionshub,
- Fig. 3: einen Schnitt durch einen Teilbereich eines Formwerk- zeugs mit einem in die Basisform integrierten Perfo- rationswerkzeug, kombiniert mit einem zweiten Formge- genstück, nach dem Expansionshub,
- Fig. 4: einen Querschnitt durch ein Formteil mit Sollbruchli- nie und
- Fig. 5: einen Schnitt durch einen Teilbereich eines Formwerk- zeugs mit einem in der Basisform integrierten Perfo- rationswerkzeug, kombiniert mit einem ersten Formge- genstück.

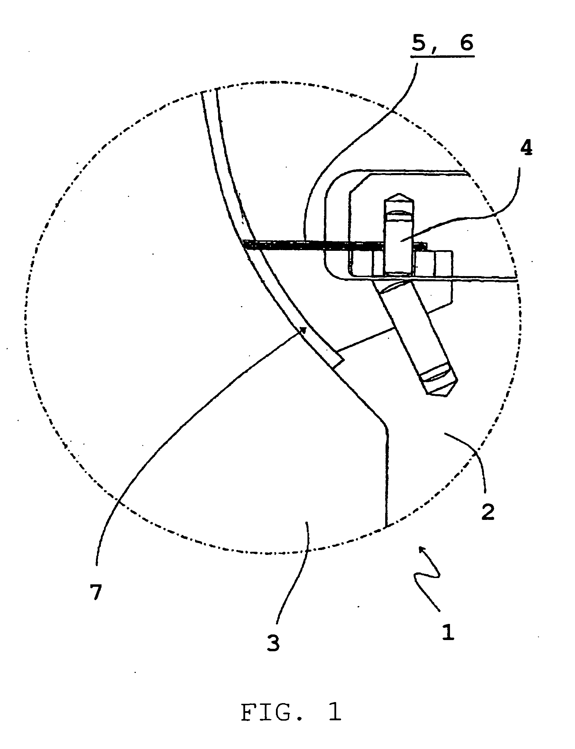

Die Figur 1 zeigt einen Schnitt durch einen Ausschnitt eines Formwerkzeugs 1 das, nicht gegunstand der vonliegenden Erfindung ist, mit einer Basisform 2 und einem ersten Formgegenstück 3, wobei in die Basisform 2 ein Perforationswerkzeug 4 integriert ist. Das Perforationswerkzeug 4 ist mit einem verschiebbaren Schneidmesser 5 bzw. einer verschiebbaren Perforationsnadel 6 ausgerüstet und ragt in eine erste Kavität 7 hinein, die zwischen der Basisform 2 und dem ersten Formgegenstück 3 ausgebildet ist. Dabei erstreckt sich das Perforationswerkzeug 4 mit der Perforationsnadel 6 bzw. dem Schneidmesser 5 bis hin zur Oberfläche des ersten Formgegenstücks 3, sodass an diesen Stellen beim Einspritzen des Polymermaterials für den Träger 8 in das Formwerkzeug 1 Durchbrüche ausgebildet werden. Die Figur 1 zeigt eine Momentaufnahme vor dem Start des eigentlichen Formgebungsprozesses, bei der die Kavität 7 noch nicht mit Polymermaterial gefüllt ist.

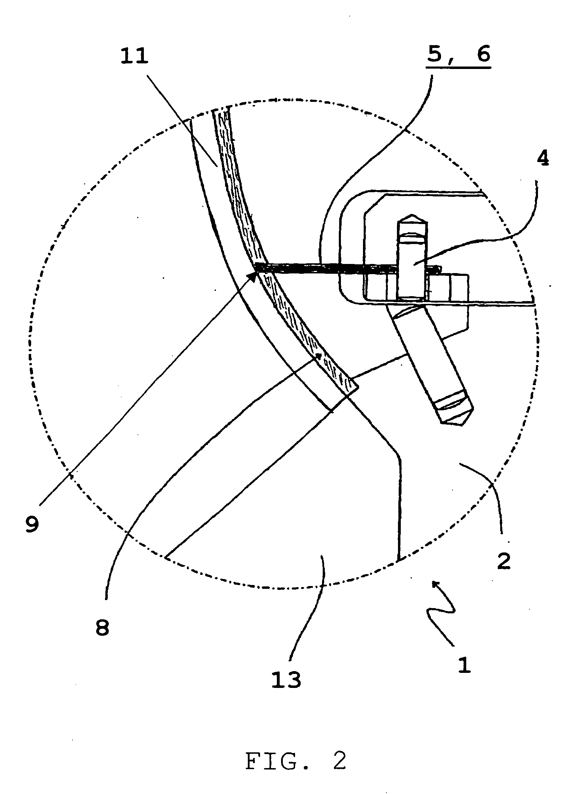

Die Figur 2 zeigt den gleichen Schnitt durch den gleichen Ausschnitt des Formwerkzeugs 11 nach dem ersten Spritzgießzyklus, bei dem nun die Trägerschicht 8 im Bereich der ersten Kavität 7 ausgebildet ist. Die Perforationsnadel 6 bzw. das Schneidmesser 5 des Perforationswerkzeugs 4 ragt in die Trägerschicht 8 hinein und bildet somit einen Durchbruch 9 in der Trägerschicht 8 aus. Die Figur 2 gibt eine Momentaufnahme vor dem zweiten Spritzgießzyklus wieder, bei der die Basisform bereits mit dem zweiten Formgegenstück 13 kombiniert ist, die Trägerschicht 8 bereits erstarrt ist und zwischen den beiden Formteilen bzw. zwischen dem zweiten Formgegenstück 13 und der Oberfläche des Trägers 8 eine zweite Kavität 11 ausgebildet ist.

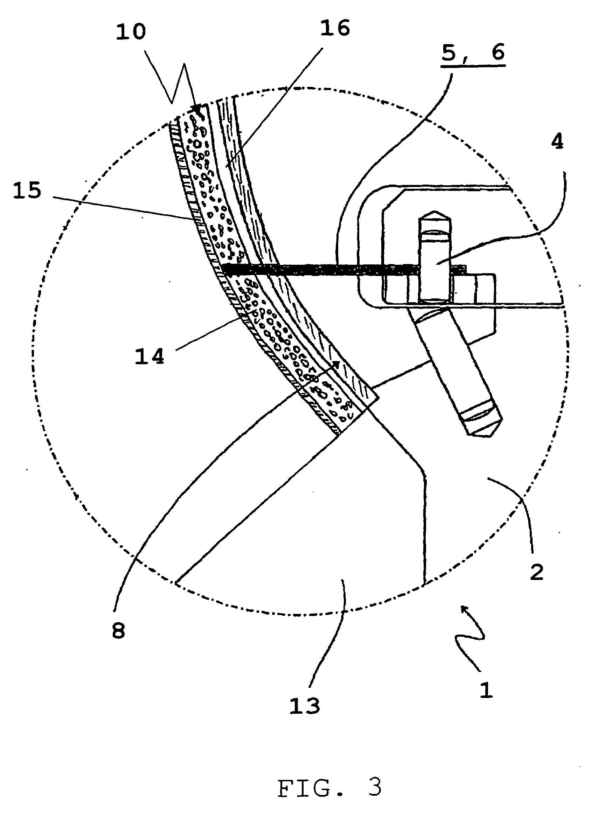

Die Figur 3 zeigt einen Schnitt durch den gleichen Ausschnitt des Formwerkzeugs 11 wie in den Figuren 1 und 2 nach dem zweiten Spritzgießzyklus. Dabei ist die Basisform 2 mit dem integrierten Perforationswerkzeug 4 unverändert mit dem zweiten Formgegenstück 13 kombiniert. Das thermoplastische Elastomer füllt die zweite Kavität 11 aus und es hat sich nach durchlaufenem Expansionshub eine Schaumschicht 10 mit einem Schaumkern 14 und zwei kompakten Randschichten 15, 16 ausgebildet. Die Perforationsnadel 6 bzw. das Schneidmesser 5 des Perforationswerkzeugs 4 durchtrennt die Schaumschicht und ist bis hin zur kompakteren Außenschicht verschoben.

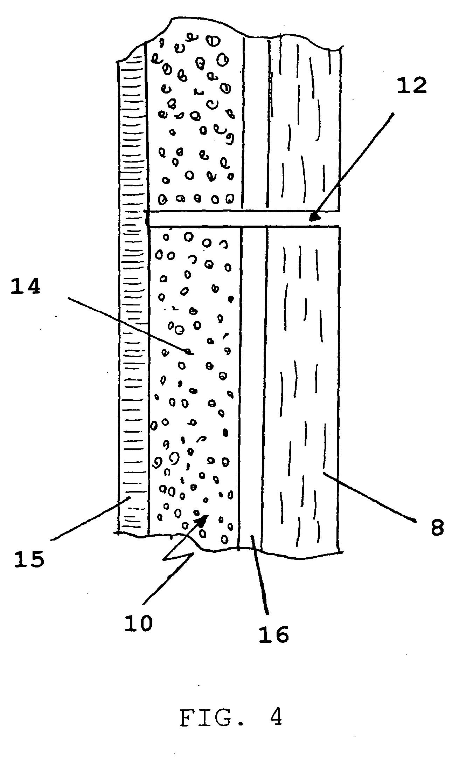

Die Figur 4 zeigt einen Schnitt durch einen Teilbereich des fertigen mehrschichtigen Formteils, aus dem der Aufbau des Formteils deutlich wird. Auf der Trägerschicht 8 ist eine geschäumte Schicht 10 aufgebracht, die sich aus einem geschäumten Kern 14 einer Zwischenschicht 16 und einer Dekorhaut 15 zusammensetzt. Dieser Formteilausschnitt weist eine Sollbruchlinie 12 auf, die durch Träger und Schaumschicht bis hin zur Dekorhaut 15 reicht.

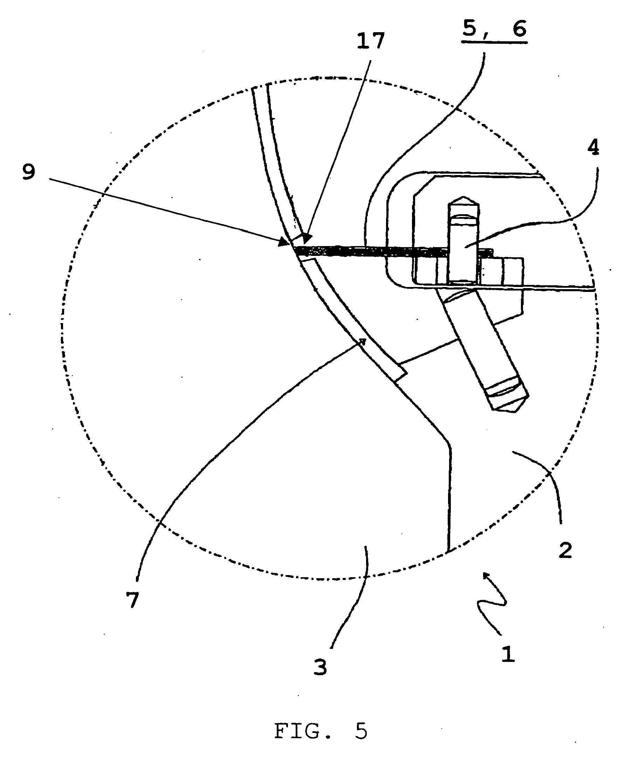

Die Figur 5 zeigt eine Ausgestaltung der vorliegenden Erfindung. Dabei ist die Basisform 2 des Formwerkzeugs 1 im Bereich der ersten Kavität 7 mit Noppen 17 ausgerüstet, in die das Perforationswerkzeug 4 mit dem Schneidmesser 5 bzw. der Perforationsnadel 6 integriert ist. Die Noppen 17 reichen bis zur Oberfläche des ersten Formgegenstücks 3 und bilden somit einen Durchbruch 9 im späteren Träger 8 aus, durch den dann das Perforationselement 5, 6 des Perforationswerkzeugs 4 im zweiten Spritzgießzyklus in die geschäumte Schicht 10 eingebracht werden kann. Bei dieser Ausführungsform werden bevorzugt Perforationsnadeln 6 eingesetzt und die Sollbruchlinie wird durch eine Aneinanderreihung von einzelnen, beabstandeten und mit Perforationsnadeln ausgerüsteten Noppen in der Basisform 2 des Formwerkzeugs 1 ausgebildet.

Auch wenn in den Zeichnungen ausschließlich die Herstellung einer geschäumten Dekorschicht dargestellt wird, so ist das erfindungsgemäße Verfahren jedoch nicht darauf beschränkt, sondern es eignet sich ebenso gut für das Aufbringen von nichtgeschäumten Dekorschichten auf einem Trägermaterial, wobei dann für den zweiten Spritzgusszyklus ein thermoplastisches Elastomer ohne Treibmittel verwendet wird und dementsprechend auch kein expandierbares Werkzeuggegenstück eingesetzt werden muss.

In dem in den Figuren dargestellten Ausführungsbeispiel endet die Perforationsnut darüber hinaus vor der kompakten Außenschicht. Auch darin ist keine Beschränkung der vorliegenden Erfindung zu sehen. Erfindungswesentlich ist, dass eine dünne ungeschwächte Restwand verbleibt, wobei die Perforationsnadel oder das Perforationsmesser je nach Gestaltung der Dekorschicht und Aufteilung der einzelnen Schichten auch bis in die kompaktere Außenschicht vordringen kann.

### Bezugszeichenliste

- 1: Formwerkzeug
- 2: Basisform
- 3: Erstes Formgegenstück
- 4: Perforationswerkzeug
- 5: Schneidmesser
- 6: Perforationsnadel
- 7: Erste Kavität
- 8: Träger
- 9: Durchbruch
- 10: Dekorschicht
- 11: Zweite Kavität
- 12: Sollbruchlinie
- 13: Zweites Formgegenstück
- 14: Schaumkern
- 15: Dekorhaut
- 16: Zwischenschicht
- 17: Noppe mit integriertem Schneidwerkzeug

## Patentansprüche

1. Verfahren zur Herstellung eines eine Sollbruchlinie (12) für eine Airbagöffnung aufweisenden Formteils mit einer Trägerschicht (8) und einer Dekorschicht (10), wobei das Verfahren mindestens zwei Spritzgießzyklen in einem mindestens zweistufigen Formwerkzeug (1) umfasst, wobei
a) in dem Formwerkzeug (1) in einer ersten Stufe mit einem ersten Formgegenstück (3) und einer ersten Kavität (7) über einen ersten Spritzgießzyklus zunächst die Trägerschicht (8) ausgebildet wird; und
b) auf die fertige Trägerschicht (8) dann in dem Formwerkzeug (1) in einer zweiten Stufe mit einem zweiten Formgegenstück (13) und einer zweiten Kavität (11) in einem zweiten Spritzgießzyklus eine Dekorschicht (10) aufgebracht wird,
wobei beim ersten Spritzgießzyklus in der Trägerschicht (8) Durchbrüche (9) ausgebildet werden, durch die beim zweiten Spritzgießzyklus ein Perforationselement (5, 6) eines in das Formwerkzeug (1) integrierten Perforationswerkzeugs (4) in die Dekorschicht (10) eingeführt wird,
**dadurch gekennzeichnet, dass** die Durchbrüche (9) in der Trägerschicht (8) im ersten Spritzgießzyklus durch in die Basisform (2) des Formwerkzeugs (1) integrierte, mit einem Perforationswerkzeug (4) bestückte Noppen (17) ausgebildet werden.

2. Verfahren nach Anspruch 1,
**dadurch gekennzeichnet, dass** im zweiten Spritzgießzyklus eine geschäumte Schicht als Dekorschicht (10) aufgebracht wird.

3. Verfahren nach Anspruch 2,
**dadurch gekennzeichnet, dass** der zweite Spritzgießzyklus zur Ausbildung der geschäumten Schicht (10) einen Expansionshub durchläuft.

4. Verfahren nach einem der Ansprüche 1 bis 3,
**dadurch gekennzeichnet, dass** als Material für die Trägerschicht (8) ein thermoplastischer Kunststoff ist, ausgewählt aus der Gruppe Polypropylen (PP), Polyethylen (PE), Polybutylenterephthalat (PBT), Polyamid (PA), Polystyrol (PS), Polycarbonat (PC), Polymethylmethacrylat (PMMA), Acrylnitril-Butadien-Styrol (ABS) oder Acrylnitril-Butadien-Styrol / Polycarbonat Copolymerisat (ABS-PC) Polyoxymethylen (POM), eingesetzt wird.

5. Verfahren nach Anspruch 4,
**dadurch gekennzeichnet, dass** die Trägerschicht (8) mit Fasern, ausgewählt aus der Gruppe Glasfasern, Karbonfasern oder textile Naturfasern verstärkt wird.

6. Verfahren nach einem der Ansprüche 1 bis 5,
**dadurch gekennzeichnet, dass** als Material für die Dekorschicht (10) ein thermoplastisches Elastomer (TPE) auf Basis von Polyurethan (PU), Polypropylen (PP), Polyethylen oder Polyamid (PA) eingesetzt wird.

7. Verfahren nach einem der Ansprüche 2 oder 3,
**dadurch gekennzeichnet, dass** als Material für die geschäumte Dekorschicht (10) ein mit Treibmittel beladenes thermoplastisches Elastomer (TPE) auf Basis von Polyurethan (PU), Polypropylen (PP), Polyethylen oder Polyamid (PA) eingesetzt wird.

8. Verfahren nach einem der Ansprüche 1 bis 7,
**dadurch gekennzeichnet, dass** ein in das Formwerkzeug (1) integriertes, mit einem Schneidmesser (5) bestücktes Perforationswerkzeug (4) eingesetzt wird.

9. Verfahren nach einem der Ansprüche 1 bis 8,
**dadurch gekennzeichnet, dass** ein in das Formwerkzeug (1) integriertes, mit Perforationsnadeln (6) bestücktes Perforationswerkzeug (4) eingesetzt wird.

10. Verfahren nach Anspruch 6,
**dadurch gekennzeichnet, dass** das Perforationselement (5, 6) des in die Basisform des Formwerkzeugs (1) integrierten Perforationswerkzeugs (4) nach dem zweiten Spritzgießzyklus in das noch nicht erstarrte thermoplastische Elastomer der Dekorschicht (10) eingeführt wird, wobei im ausgefahrenen Zustand des Perforationswerkzeuges (4) eine dünne ungeschwächte Restwand in der Dekorschicht (10) verbleibt.

11. Verfahren nach einem der Ansprüche 2, 3 oder 7,
**dadurch gekennzeichnet, dass** das Perforationselement (5, 6) des in die Basisform des Formwerkzeugs (1) integrierte Perforationswerkzeugs (4) während oder nach dem Expansionshub des Formgegenstücks (13) in den noch nicht erstarrten Schaum des thermoplastischen Elastomers der geschäumten Dekorschicht (10) eingeführt wird, wobei im ausgefahrenen Zustand des Perforationswerkzeuges (4) eine dünne ungeschwächte Restwand in der geschäumten Schicht (10) verbleibt.

12. Vorrichtung zur Herstellung eines eine Sollbruchlinie (12) für eine Airbagöffnung aufweisenden Formteils, wobei die Vorrichtung ein mindestens zweistufiges Formwerkzeug (1) mit einem ersten Formgegenstück (3) mit einer ersten Kavität (7) zur Ausbildung einer Trägerschicht (8) in einer ersten Stufe und einem zweiten Formgegenstück (13) mit einer zweiten Kavität (11) zur Ausbildung einer Dekorschicht (10) in einer zweiten Stufe umfasst, wobei in die Basisform (2) des Formwerkzeugs (1) ein ein verschiebbar angeordnetes Perforationselement (5, 6) aufweisendes Perforationswerkzeug (4) integriert ist,
**dadurch gekennzeichnet, dass** die Basisform (2) mit Noppen (17) ausgerüstet ist, in die das Perforationswerkzeug (4) integriert ist.

13. Vorrichtung nach Anspruch 12,
**dadurch gekennzeichnet, dass** die zweite Kavität (11) zur Ausbildung einer geschäumten Schicht (10) expandierbar ist.

14. Vorrichtung nach Anspruch 12 oder 13,
**dadurch gekennzeichnet, dass** das in das Formwerkzeug (1) integrierte Perforationswerkzeug (4) mit einem in die Dekorschicht (10) einführbaren Schneidmesser (5) bestückt ist.

15. Vorrichtung nach Anspruch 12 oder 13,
**dadurch gekennzeichnet, dass** das in das Formwerkzeug (1) integrierte Perforationswerkzeug (4) mit in die Dekorschicht (10) einführbaren Perforationsnadeln (6) bestückt ist.

## Claims

1. Method for production of a moulding with a nominal break line (12) for an airbag opening, with a carrier layer (8) and a décor layer (10), wherein the method comprises at least two injection moulding cycles in a moulding tool (1) with at least two stages, wherein
a) in the moulding tool (1) in a first stage, with a first moulding counterpiece (13) and a first cavity (7), the carrier layer (8) is formed first via a first injection moulding cycle; and
b) then on the finished carrier layer (8) in the moulding tool (1) in a second stage with a second moulding counterpiece (13) and a second cavity (11), a décor layer (10) is applied in a second injection moulding cycle,
where in the first injection moulding cycle, in the carrier layer (8) openings (9) are formed through which in the second injection moulding cycle a perforation element (5, 6) of a perforation tool (4) integrated into the moulding tool (1) is introduced into the decor layer (10),
**characterised in that** the openings (9) in the carrier layer (8) are formed in the first injection moulding cycle by studs (17) integrated in the base mould (2) of the moulding tool (1) and fitted with a perforation tool (4).

2. Method according to claim 1, **characterised in that** a foamed layer is applied as a decor layer (10) in the second injection moulding cycle.

3. Method according to claim 2, **characterised in that** the second injection moulding cycle comprises an expansion stroke to form the foamed layer (10).

4. Method according to any of claims 1 to 3, **characterised in that** as a material for the carrier layer (8), a thermoplastic material is selected from the group polypropylene (PP), polyethylene (PE), polybutylene terephthalate (PBT), polyamide (PA), polystyrene (PS), polycarbonate (PC), polymethylmethacrylate (PMMA), acrylonitrile-butadiene-styrene (ABS) or acrylonitrile-butadiene-styrene / polycarbonate copolymerisate (ABS-PE), polyoxymethylene (POM).

5. Method according to claim 4, **characterised in that** the carrier layer (8) is reinforced with fibres selected from the group of glass fibres, carbon fibres or textile natural fibres.

6. Method according to any of claims 1 to 5, **characterised in that** as a material for the décor layer (10), a thermoplastic elastomer (TPE) is used based on polyurethane (PE), polypropylene (PP), polyethylene or polyamide (PA).

7. Method according to any of claims 2 or 3, **characterised in that** as a material for the foamed décor layer (10), a thermoplastic elastomer (TPE) loaded with propellant is used, based on polyurethane (PU), polypropylene (PP), polyethylene or polyamide (PA).

8. Method according to any of claims 1 to 7, **characterised in that** a perforation tool (4) is used which is integrated in the moulding tool (1) and fitted with a cutter (5).

9. Method according to any of claims 1 to 8, **characterised in that** a perforation tool (4) is used which is integrated in the moulding tool (1) and fitted with perforation needles (6).

10. Method according to claim 6, **characterised in that** the perforation element (5, 6) of the perforation tool (4) integrated in the base mould of the moulding tool (1) is introduced after the second injection moulding cycle into the thermoplastic elastomer of the décor layer (10) which has not yet set, where in the extended state of the perforation tool (4) a thin unweakened residual wall remains in the décor layer (10).

11. Method according to any of claims 2, 3 or 7, **characterised in that** the perforation element (5, 6) of the perforation tool (4) integrated in the base mould of the moulding tool (1) is introduced during or after the expansion stroke of the moulding counterpiece (13) into the foam which has not yet set of the thermoplastic elastomer of the foamed décor layer (10), where in the extended state of the perforation tool (4) a thin unweakened residual wall remains in the foamed layer (10).

12. Device for production of a moulding with a nominal break line (12) for an airbag opening, wherein the device has a moulding tool (1) with at least two stages, with a first moulding counterpiece (3) with a first cavity (7) to form a carrier layer (8) in a first stage and a second moulding counterpiece (13) with a second cavity (11) to form a décor layer (10) in a second stage, where in the base mould (2) of the moulding tool (1) is integrated a perforation tool (4) with a displaceably arranged perforation element (5, 6), **characterised in that** the base mould (2) is fitted with studs (17) in which the perforation tool (4) is integrated.

13. Device according to claim 12, **characterised in that** the second cavity (11) is expandable to form a foamed layer (10).

14. Device according to claim 12 or 13, **characterised in that** the perforation tool (4) integrated into the moulding tool (1) is fitted with a cutter (5) which can be introduced into the décor layer (10).

15. Device according to claim 12 or 13, **characterised in that** the perforation tool (4) integrated into the moulding tool (1) is fitted with perforation needles (6) which can be introduced into the décor layer (10).

## Revendications

1. Procédé de fabrication d'une pièce moulée comportant une ligne de rupture de consigne (12) pour une ouverture d'air bag, avec une couche support (8) et une couche de décoration (10), ce procédé comportant au moins deux cycles de moulage par injection dans un outil de moulage (1) en au moins deux étapes, selon lequel :
a) la couche support (8) est tout d'abord formée dans l'outil de moulage (1), dans une première étape, au moyen d'une première contre-pièce de moulage (3) et d'une première cavité (7) par un premier cycle de moulage par injection, et
b) une couche de décoration (10) est ensuite appliquée sur la couche support (8) achevée dans l'outil de moulage (1) dans une seconde étape, au moyen d'une seconde contre-pièce de moulage (13) et d'une seconde cavité (11) par un second cycle de moulage par injection, lors du premier cycle de moulage par injection des perçages (9) étant formés dans la couche support (8), perçages par lesquels lors du second cycle de moulage par injection, un élément de perforation (5, 6) d'un outil de perforation (4) intégré dans l'outil de moulage (1) est introduit dans la couche de décoration (10),
**caractérisé en ce que**
les perçages (9) sont réalisés dans la couche support (8), dans le premier cycle de moulage par injection par l'intermédiaire de boutons (17) intégrés dans la pièce de base (2) de l'outil de moulage (1) et équipés d'un outil de perforation (4).

2. Procédé conforme à la revendication 1,
**caractérisé en ce que**
lors du second cycle de moulage par injection on applique une couche expansée en tant que couche de décoration (10).

3. Procédé conforme à la revendication 2,
**caractérisé en ce que**
le second cycle de moulage par injection exécute une course de détente pour former la couche expansée (10).

4. Procédé conforme à l'une des revendications 1 à 3,
**caractérisé en ce qu'**
en tant que matériau pour la couche support (8) on utilise un matériau synthétique thermoplastique choisi dans le groupe formé par les composés suivants : polypropylène (PP), polyéthylène (PE), polybutylèneté-rephtalate (PBT), polyamide (PA), polystyrène (PS), polycarbonate (PC), polyméthylméthacrylate (PMMA), acrylonitrile-butadiène-styrène (ABS) ou copolymère acrylonitrile-butadiène-styrène / polycarbonate (ABS-PC), polyoxymethylène (POM).

5. Procédé conforme à la revendication 4,
**caractérisé en ce que**
la couche support (8) est renforcée par des fibres choisies dans le groupe des fibres de verre, des fibres de carbone, ou des fibres textiles naturelles.

6. Procédé conforme à l'une des revendications 1 à 5,
**caractérisé en ce qu'**
en tant que matériau pour la couche de décoration (10) on utilise un élastomère thermoplastique (TPE) à base de polyuréthane (PU), de polypropylène (PP), de polyéthylène ou de polyamide (PA).

7. Procédé conforme à l'une des revendications 2 ou 3,
**caractérisé en ce qu'**
en tant que matériau pour la couche de décoration expansée (10) on utilise un élastomère thermoplastique chargé par un agent moussant (TPE) à base de polyuréthane (PU), de polypropylène (PP), de polyéthylène ou de polyamide (PA).

8. Procédé conforme à l'une des revendications 1 à 7,
**caractérisé en ce que**
l'on met en oeuvre un outil de perforation (4) intégré dans l'outil de moulage (1) et équipé d'une lame de coupe (5).

9. Procédé conforme à l'une des revendications 1 à 8,
**caractérisé en ce que**
l'on met en oeuvre un outil de perforation (4) intégré dans l'outil de moulage (1) et équipé d'aiguilles de perforation (6).

10. Procédé conforme à la revendication 6,
**caractérisé en ce que**
l'élément de perforation (5, 6) de l'outil de perforation (4) intégré dans la pièce de base de l'outil de moulage (1) est introduit dans l'élastomère thermoplastique de la couche de décoration (10) non encore solidifié après le second cycle de moulage par injection, une mince paroi résiduaire non affaiblie restant dans la couche de décoration (10) lorsque l'outil de perforation (4) est déployé.

11. Procédé conforme à l'une des revendications 2, 3 ou 7
**caractérisé en ce que**
l'élément de perforation (5, 6) de l'outil de perforation (4) intégré dans la pièce de base de l'outil de moulage (1) est introduit dans la mousse pas encore solidifiée de l'élastomère thermoplastique de la couche de décoration expansée (10) pendant ou après la course de détente de la contre-pièce de moulage (13), une mince paroi résiduaire mince non affaiblie restant dans la couche expansée (10), lorsque l'outil de perforation (4) est déployé.

12. Dispositif de fabrication d'une pièce moulée comportant une ligne de rupture de consigne (12) pour une ouverture d'air bag, ce dispositif comportant un outil de moulage en au moins deux étapes (1) équipé d'une première contre-pièce de moulage (3) avec une première cavité (7) pour former une couche support (8) dans une première étape, et une seconde contre-pièce de moulage (13) équipée d'une seconde cavité (11) pour former une couche de décoration (10) dans une seconde étape, un outil de perforation (4) équipé d'un élément de perforation (5, 6) mobile en translation étant intégré dans la pièce de base (2) de l'outil de moulage (1),
**caractérisé en ce que**
la pièce de base (2) est équipée de boutons (17) dans lesquels est intégré l'outil de perforation (4),

13. Dispositif conforme à la revendication 12,
**caractérisé en ce que**
la seconde cavité (11) peut être détendue pour former une couche expansée (10).

14. Dispositif conforme à la revendication 12 ou 13,
**caractérisé en ce que**
l'outil de perforation (4) intégré dans l'outil de moulage (1) est équipé d'une lame de coupe (5) pouvant être introduite dans la couche de décoration (10).

15. Dispositif conforme à la revendication 12 ou 13,
**caractérisé en ce que**
l'outil de perforation (4) intégré dans l'outil de moulage (1) est équipé d'aiguilles de perforation (6) pouvant être introduites dans la couche de décoration (10).
